# EUROPEAN PATENT APPLICATION

(11) **EP 3 118 473 A1**
(43) Date of publication of application: **18.01.2017**
(21) Application number: 15761525.3
(22) Date of filing: 17.02.2015
(51) Int. Cl.: F16C 17/10, B22F 3/24, B22F 5/00, F16C 33/12, F16C 33/14, H02K 7/08

(54) **SINTERED BEARING, FLUID DYNAMIC BEARING DEVICE AND MOTOR COMPRISING SAME, AND SINTERED BEARING MANUFACTURING METHOD**

(30) Priority: 11.03.2014 JP 2014047693
(71) Applicant: NTN Corporation, Osaka-shi, Osaka 550-0003 (JP)
(72) Inventor: HARADA Kazuyoshi, Kuwana-shi Mie 511-8678 (JP); KURIMURA Tetsuya, Kuwana-shi Mie 511-8678 (JP)
(74) Representative: Eder Schieschke & Partner mbB
(86) International application number: PCT/JP2015/054310
(87) International publication number: WO 2015/137059

(57) **Abstract**

Provided is a sintered bearing (8) having a plurality of axial grooves (8c1) equiangularly arranged in an outer peripheral surface (8c) thereof and a plurality of dynamic pressure generating grooves (8a11) equiangularly arranged in an inner peripheral surface (8a) thereof, in which a number of the plurality of axial grooves (8c1) is an integral multiple of a number of the plurality of dynamic pressure generating grooves (8a11) on the same circumference.

## Description

### Technical Field

The present invention relates to a sintered bearing, a fluid dynamic bearing device and a motor each comprising the sintered bearing, and to a method of manufacturing a sintered bearing.

### Background Art

A fluid dynamic bearing device is configured to relatively rotatably support a shaft member in a non-contact manner by a pressure generated by a fluid film (for example, an oil film) in a radial bearing gap defined between an outer peripheral surface of the shaft member and an inner peripheral surface of a bearing member. The fluid dynamic bearing device has advantages in high rotational accuracy and quietness. Thus, the fluid dynamic bearing device is preferably usable for a small-sized motor such as a spindle motor for information equipment (for example, magnetic disk drives such as an HDD, drives for optical discs such as a CD-ROM, a CD-R/RW, a DVD-ROM/RAM, and a Blu-ray Disc, and drives for magneto-optical disks such as an MD and an MO), a polygon scanner motor for a laser beam printer (LBP), a color wheel for a projector, and a fan motor to be used for a cooling fan of an electrical apparatus, and so on.

As the bearing member to be used for such a fluid dynamic bearing device, a sintered bearing made of sintered metal may be used. The sintered bearing is subjected to dimension accuracy correction processing called sizing, thereby obtaining extremely high dimension accuracy. Thus, a radial bearing gap between the sintered bearing and the shaft member is set with high accuracy, thereby being capable of obtaining high rotation accuracy. In order to actively increase the pressure of the oil film in the radial bearing gap, dynamic pressure generating grooves are often formed in the inner peripheral surface of the sintered bearing (see, for example, Patent Literatures 1 and 2).

The fluid dynamic bearing device as disclosed in Patent Literature 1 can be assembled by, for example, fixing the sintered bearing on an inner periphery of a housing, filling an oil, and then, inserting the straight shaft member along an inner periphery of the sintered bearing. In this case, when the shaft member is inserted along the inner periphery of the sintered bearing, the shaft member undesirably takes air so that air bubbles may be mixed in a lubricating oil in the bearing device. Further, during an operation of the fluid dynamic bearing device, due to local generation of a negative pressure in the lubricating oil in the bearing device, air bubbles maybe formed in the lubricating oil. When the air bubbles are formed in the lubricating oil in the bearing device, in particular, in the oil film in the radial bearing gap, the pressure of the oil film is reduced. Thus, sufficient rotation accuracy of the shaft member may not be obtained. Further, the inner peripheral surface of the sintered bearing may be damaged through contact with the outer peripheral surface of the shaft member, thereby degrading the durability.

In order to avoid such an inconvenience, a plurality of axial grooves are sometimes formed in an outer peripheral surface of the sintered bearing of the fluid dynamic bearing device (see, for example, Patent Literatures 1 and 2). When the shaft member is inserted along the inner periphery of the sintered bearing after the oil is filled, the air can be discharged to the outside through the axial grooves. Further, through the axial grooves, a space in the bearing device, which is liable to generate a negative pressure, can be communicated to a space in the vicinity of an opening of the bearing device. Thus, the space can be brought into a state of having a pressure close to an atmospheric pressure, to thereby prevent generation of the negative pressure.

### Citation List

- Patent Literature 1:: JP 3734981 B2

- Patent Literature 2:: JP 2012-177456 A

### Summary of Invention

### Technical Problem

Incidentally, the sintered bearing is generally manufactured through a forming step of subjecting material powder to compression molding to forma compact, a sintering step of sintering the compact to form a sinteredbody, and a sizing step of recompressing the sintered body to correct dimension accuracy. The above-mentioned axial grooves each have a groove depth larger than that of each of the dynamic pressure generating grooves, and dimension accuracy is not required to be considerably high. Thus, the above-mentioned axial grooves are often formed in the forming step before the sintering. Meanwhile, the dynamic pressure generating grooves each have an extremely small groove depth (for example, 10 µm or smaller), and dimension accuracy is required to be high in order to efficiently cause a dynamic pressure generating action. Thus, the dynamic pressure generating grooves are often formed in the sizing step after the sintering. Specifically, forming patterns having a shape in conformity with the dynamic pressure generating grooves are arranged on an outer peripheral surface of a core rod. The sintered body is press-fitted to the inner periphery of the die under a state in which the core rod is inserted along the inner periphery of the sinteredbody. Thus, the sinteredbody is compressed from an outer periphery thereof to press the inner peripheral surface of the sintered body onto the forming patterns on the outer peripheral surface of the core rod. With this, the shape of the forming patterns is transferred to the inner peripheral surface of the sintered body, thereby forming the dynamic pressure generating grooves.

In the above-mentioned case, an outer peripheral surface of the sintered body to be subjected to the sizing step has the axial grooves formed in advance in the forming step. Therefore, when the sintered body is press-fitted to the inner periphery of the die, spaces are formed between the axial grooves of the sintered body and the inner peripheral surface of the die. In this case, in the region where the axial grooves are formed, a compression force from the die is not applied to the sintered body so that nonuniform stress distribution may occur in the sinteredbody. Thus, the inner peripheral surface of the sintered body is not uniformly pressed onto the core rod, thereby causing a fear in that dimension accuracy of the inner peripheral surface of the sintered bearing is not sufficiently increased. In particular, in a case where the dynamic pressure generating grooves are formed in the inner peripheral surface of the sintered body through die molding in the sizing step, when the inner peripheral surface of the sintered body is not uniformly pressed onto the forming patterns, variation in groove depth of the dynamic pressure generating grooves is increased, thereby causing a fear in that the effect of increasing the pressure of the fluid film in the radial bearing gap is reduced to lead to degradation of bearing rigidity.

In view of the above-mentioned circumstances, it is an object of the present invention to provide a sintered bearing having axial grooves in an outer peripheral surface thereof and dynamic pressure generating grooves in an inner peripheral surface thereof, in which variation in groove depth of the dynamic pressure generating grooves is suppressed to increase bearing rigidity.

### Solution to Problem

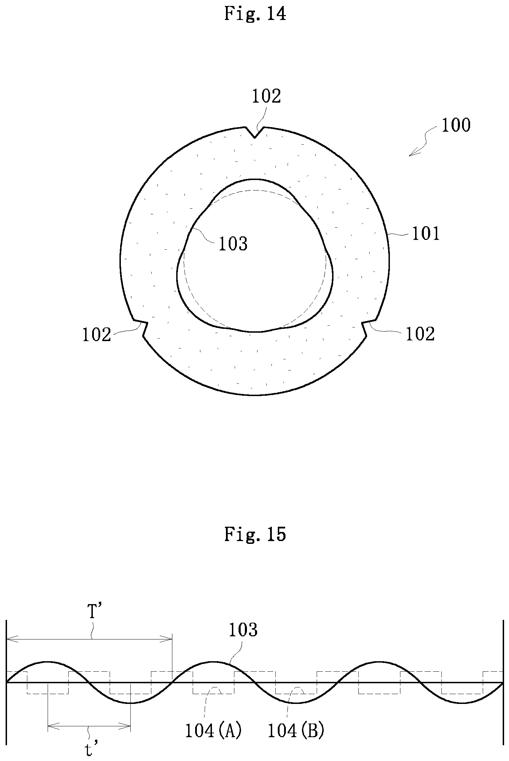

As described above, when the sintered body having the plurality of axial grooves in the outer peripheral surface is subjected to the sizing, the compression force is not applied to the forming region for the axial grooves. Thus, the nonuniform stress distribution may occur in the sintered body, thereby forming waves in a circumferential direction on the inner peripheral surface of the sintered body. For example, as illustrated in FIG. 14, when three axial grooves 102 are equiangularly formed in an outer peripheral surface 101 of a sintered body 100, the compression force becomes smaller at a circumferential position of each of the axial grooves 102. Thus, an inner peripheral surface 103 of the sintered body 100 is increased in diameter at the circumferential positions, thereby forming waves on the inner peripheral surface 103 (the waves on the inner peripheral surface 103 are illustrated with exaggeration in FIG. 14). When six dynamic pressure generating grooves 104 are formed at equal intervals on the same circumference in the inner peripheral surface 103 of the sintered body 100 having such waves formed thereon, as schematically illustrated in FIG. 15, a wavelength T' of the waves on the inner peripheral surface 103 becomes twice as large as a pitch t' of the dynamic pressure generating grooves 104. In this case, there are formed dynamic pressure generating grooves 104(A) on peak portions of the waves and dynamic pressure generating grooves 104(B) on valley portions of the waves so that the variation in groove depth of the dynamic pressure generating grooves 104 is increased.

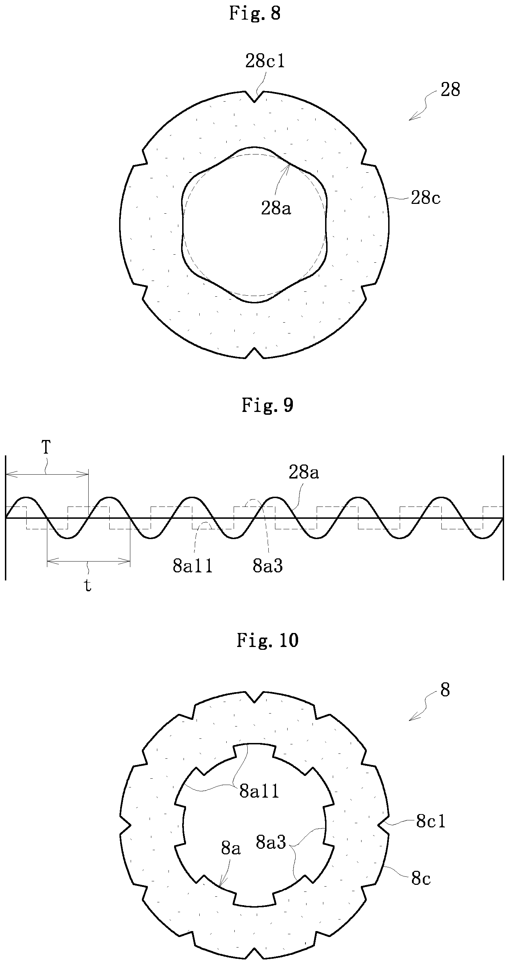

In view of the above, the number of the axial grooves to be formed in the outer peripheral surface of the sintered bearing is set equal to the number of the dynamic pressure generating grooves to be formed on the same circumference in the inner peripheral surface of the sintered bearing. Thus, a wavelength T of the waves on the inner peripheral surface of the sintered body and a pitch t of the dynamic pressure generating grooves become equal to each other so that the dynamic pressure generating grooves are formed at the same portions of the waves (see FIG. 9). With this, influences on the dynamic pressure generating grooves by the waves are equalized, thereby suppressing the variation in groove depth of the dynamic pressure generating grooves. Such an effect is obtained not only when the number of the axial grooves and the number of the dynamic pressure generating grooves are set equal to each other, but also similarly obtained when the number of the axial grooves is set to be two times, three times, or more times as large as the number of the dynamic pressure generating grooves. That is, it is only necessary that the number of the axial grooves be set to be an integral multiple of the number of the dynamic pressure generating grooves.

The present invention has been made based on the above-mentioned idea. Specifically, according to one embodiment of the present invention, there is provided a sintered bearing having a plurality of axial grooves equiangularly arranged in an outer peripheral surface thereof and a plurality of dynamic pressure generating grooves equiangularly arranged in an inner peripheral surface thereof, wherein a number of the plurality of axial grooves is an integral multiple of a number of the plurality of dynamic pressure generating grooves on the same circumference.

Further, according to one embodiment of the present invention, there is provided a method of manufacturing a sintered bearing, comprising the steps of: subjecting material powder to compression molding to form a compact having a plurality of axial grooves equiangularly arranged in an outer peripheral surface thereof; sintering the compact to form a sintered body; and sizing by inserting a core rod having forming patterns on an outer peripheral surface thereof along an inner periphery of the sintered body, compressing the sintered body from an outer periphery thereof under a state in which the core rod is inserted along the inner periphery of the sintered body, and by pressing an inner peripheral surface of the sintered body onto the forming patterns on the outer peripheral surface of the core rod, thereby forming a plurality of dynamic pressure generating grooves equiangularly arranged in the inner peripheral surface of the sintered body, wherein a number of the plurality of axial grooves is an integral multiple of a number of the plurality of dynamic pressure generating grooves on the same circumference.

Further, during the sizing, a factor of leading to the nonuniform distribution of the stress in the sintered body includes the radial depth of each of the axial grooves other than the above-mentioned number of the axial grooves. When the radial depth of each of the axial grooves is excessively large, the waves on the inner peripheral surface of the sintered body become larger so that the variation in groove depth of the dynamic pressure generating grooves is increased. According to investigation conducted by the inventors of the present invention, it was verified that, in particular, when the radial depth of each of the axial grooves exceeds 20% of the radial thickness of the sintered bearing, the variation in groove depth of the dynamic pressure generating grooves is significantly increased. Thus, it is preferred that a radial depth of each of the plurality of axial grooves be equal to or smaller than 20% of a radial thickness of the sintered bearing.

The fluid dynamic bearing device comprising the above-mentioned sintered bearing, the shaft member inserted along the inner periphery of the sintered bearing, and the radial bearing portion configured to support the shaft member in a radial direction with the pressure of the fluid film generated in the radial bearing gap between the inner peripheral surface of the sintered bearing and the outer peripheral surface of the shaft member has high bearing rigidity and can obtain excellent rotation accuracy.

The fluid dynamic bearing device as described above can be appropriately incorporated into a motor comprising a stator coil and a rotor magnet.

### Advantageous Effects of Invention

As described above, according to the sintered bearing of the present invention, the variation in groove depth of the dynamic pressure generating grooves is suppressed, and hence the pressure of the fluid film in the radial bearing gap is efficiently increased, thereby being capable of increasing the bearing rigidity.

### Brief Description of Drawings

FIG. 1 is a sectional view of a spindle motor.
FIG. 2 is a sectional view of a fluid dynamic bearing device incorporated into the spindle motor.
FIG. 3 is an axial sectional view of a sintered bearing arranged in the above-mentioned fluid dynamic bearing device according to an embodiment of the present invention.
FIG. 4 is a sectional view of the above-mentioned sintered bearing taken along the line IV-IV of FIG. 3.
FIG. 5 is a view of a lower surface of the above-mentioned sintered bearing.
FIG. 6 (a) is a sectional view for illustrating a state before forming in a forming step in a method of manufacturing the above-mentioned sintered bearing.
FIG. 6(b) is a sectional view for illustrating a state after the forming in the above-mentioned forming step.
FIG. 6 (c) is a sectional view taken along the line X-X of FIG. 6 (b) .
FIG. 7 (a) is a sectional view for illustrating a state before forming in a sizing step in the method of manufacturing the above-mentioned sintered bearing.
FIG. 7(b) is a sectional view for illustrating a state after the forming in the above-mentioned sizing step.
FIG. 7 (c) is a sectional view taken along the line Y-Y of FIG. 7(b).
FIG. 8 is a sectional view of the sintered body after the sizing step in a direction orthogonal to an axis.
FIG. 9 is a schematic diagram for illustrating waves and the dynamic pressure generating grooves of an inner peripheral surface of the above-mentioned sintered bearing.
FIG. 10 is a sectional view of a sinteredbearing in the direction orthogonal to an axis according to another embodiment of the present invention.
FIG. 11 is a schematic diagram for illustrating waves and dynamic pressure generating grooves of an inner peripheral surface of the sintered bearing of FIG. 10.
FIG. 12 is a graph for showing a relationship between the number of axial grooves of the sintered bearing and a difference in groove depth of the dynamic pressure generating grooves arranged on the same circumference.
FIG. 13 is a graph for showing a relationship between a groove depth of each of the axial grooves of the sintered bearing and a difference in groove depth of the dynamic pressure generating grooves arranged on the same circumference.
FIG. 14 is a sectional view of a sintered body of a comparative example.
FIG. 15 is a schematic diagram for illustrating waves and dynamic pressure generating grooves of an inner peripheral surface of the sintered body of the comparative example.

### Description of Embodiments

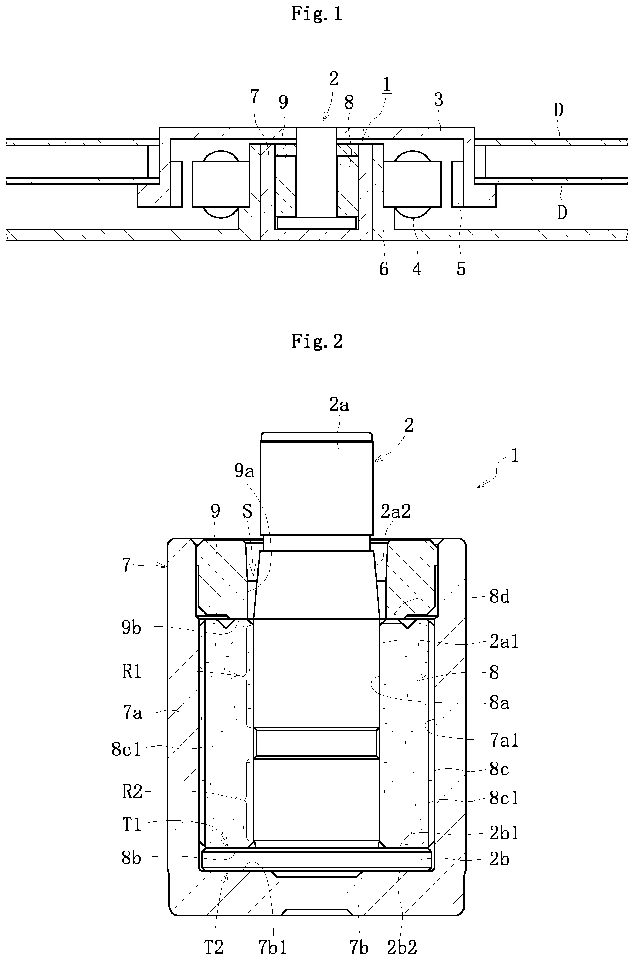

A spindle motor illustrated in FIG. 1 is used for a disk drive such as an HDD. The spindle motor comprises a fluid dynamic bearing device 1, a disk hub 3 fixed to a shaft member 2 of the fluid dynamic bearing device 1, a stator coil 4 and a rotor magnet 5 opposed to each other through intermediation of a radial gap, and a bracket 6. The stator coil 4 is fixed to the bracket 6, and the rotor magnet 5 is fixed to the disk hub 3. A housing 7 of the fluid dynamic bearing device 1 is fixed on an inner periphery of the bracket 6. The disk hub 3 holds a predetermined number of disks D (two disks in the illustrated example). When the stator coil 4 is energized, the rotor magnet 5 is rotated, thereby causing the disks D held on the disk hub 3 to rotate integrally with the shaft member 2.

As illustrated in FIG. 2, the fluid dynamic bearing device 1 comprises a sintered bearing 8 according to an embodiment of the present invention, the shaft member 2 inserted along an inner periphery of the sintered bearing 8, the bottomed cylindrical housing 7 having the sintered bearing 8 fixed on an inner peripheral surface thereof, and a sealing member 9 arranged in an opening of the housing 7. In the following description of the fluid dynamic bearing device 1, for convenience, the opening side of the housing 7 in an axial direction is referred to as an upper side, and a side opposite thereto is referred to as a lower side.

The shaft member 2 is made of a metal material such as stainless steel, and comprises a shaft portion 2a and a flange portion 2b formed on a lower end of the shaft portion 2a. The shaft portion 2a has formed thereon a cylindrical outer peripheral surface 2a1 and a tapered surface 2a2 gradually reduced in diameter toward the upper side. An outer diameter of the shaft portion 2a is set to, for example, approximately from 1 mm to 4 mm.

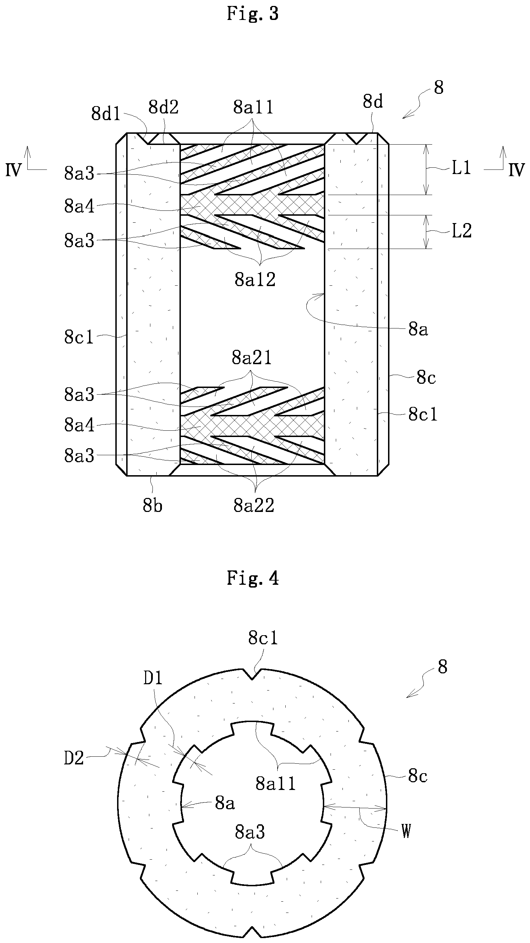

The sintered bearing 8 is made of sintered metal and formed into a cylindrical shape. Specifically, the sintered bearing 8 is made of copper-based, iron-based, or copper-iron-based sintered metal. A plurality of dynamic pressure generating grooves arranged equiangularly are formed in an inner peripheral surface 8a of the sintered bearing 8. In this embodiment, radial bearing surfaces are formed at two positions vertically separated from each other, and the dynamic pressure generating grooves having a herringbone pattern as illustrated in FIG. 3 are formed in each of the radial bearing surfaces. Specifically, a plurality of dynamic pressure generating grooves 8a11 inclined to one side in a circumferential direction are arrayed in parallel equiangularly in a region in the upper radial bearing surface, which is located on the upper side with respect to an annular hill portion 8a4 formed at the substantially center portion in the axial direction. A plurality of dynamic pressure generating grooves 8a12 inclined to another side in the circumferential direction are arrayed in parallel equiangularly in a region in the upper radial bearing surface, which is located on the lower side with respect to the annular hill portion 8a4. Similarly, a plurality of dynamic pressure generating grooves 8a21 inclined to the one side in the circumferential direction are arrayed in parallel equiangularly in a region in the lower radial bearing surface, which is located on the upper side with respect to the annular hill portion 8a4 formed at a center portion in the axial direction. A plurality of dynamic pressure generating grooves 8a22 inclined to the another side in the circumferential direction are arrayed in parallel equiangularly in a region in the lower radial bearing surface, which is located on the lower side with respect to the annular hill portion 8a4.

In this embodiment, the dynamic pressure generating grooves 8a11, 8a12, 8a21, and 8a22 (hereinafter referred to as "dynamic pressure generating grooves 8a11 and the like") each comprising six grooves are formed (see FIG. 4). In the illustrated example, pitches of the dynamic pressure generating grooves 8a11 and the like in the circumferential direction are equal to each other. Further, ends of the dynamic pressure generating grooves 8a11 and the like on a downstream side in a fluid flow direction along the dynamic pressure generating grooves 8a11 and the like (ends of the radial bearing surfaces on the center side in the axial direction) are arranged at the same circumferential positions. Inclined hill portions 8a3 extending in a direction inclined in the circumferential direction are formed at portions between the respective dynamic pressure generating grooves 8a11 and the like in the circumferential direction. In the illustrated example, the inclined hill portions 8a3 and the annular hill portion 8a4 on each of the radial bearing surfaces are formed continuously, and radially inner surfaces of the inclined hill portions 8a3 and the annular hill portion 8a4 are arranged on the same cylindrical surface. In the illustrated example, the dynamic pressure generating grooves 8a11 and 8a12 formed on the upper radial bearing surface have an asymmetric shape in the axial direction. Specifically, an axial dimension L1 of each of the dynamic pressure generating grooves 8a11 is larger than an axial dimension L2 of each of the dynamic pressure generating grooves 8a12. Meanwhile, the dynamic pressure generating grooves 8a21 and 8a22 formed on the lower radial bearing surface have a symmetrical shape in the axial direction. A groove depth D1 of each of the dynamic pressure generating grooves 8a11 and the like (diameter difference between the groove bottom of each of the dynamic pressure generating grooves 8a11 and the like and a radially inner surface of each of the inclined hill portions 8a3; see FIG. 4) is set to, for example, from 5 µm to 10 µm.

A plurality of axial grooves 8c1 are formedequiangularly in an outer peripheral surface 8c of the sintered bearing 8. The number of the plurality of axial grooves 8c1 is set to be an integral multiple of the number of the dynamic pressure generating grooves on the same circumference. In this embodiment, the number of the axial grooves 8c1 is six, and the number of any of the dynamic pressure generating grooves on the same circumference (that is, the number of each of the dynamic pressure generating grooves 8a11 and the like) is six (see FIG. 4). Therefore, the number of the axial grooves 8c1 is equal to the number of the dynamic pressure generating grooves on the same circumference. The axial grooves 8c1 are formed over the entire axial length of the outer peripheral surface 8c. The axial grooves 8c1 are formed in a radial region of chamfered portions at both upper and lower ends of the outer peripheral surface 8c. A groove depth D2 of each of the axial grooves 8c1 (diameter difference between a cylindrical surface region of the outer peripheral surface 8c and a groove bottom of each of the axial grooves 8c1; see FIG. 4) is set equal to or smaller than 20% of a radial thickness W of the sintered bearing 8.

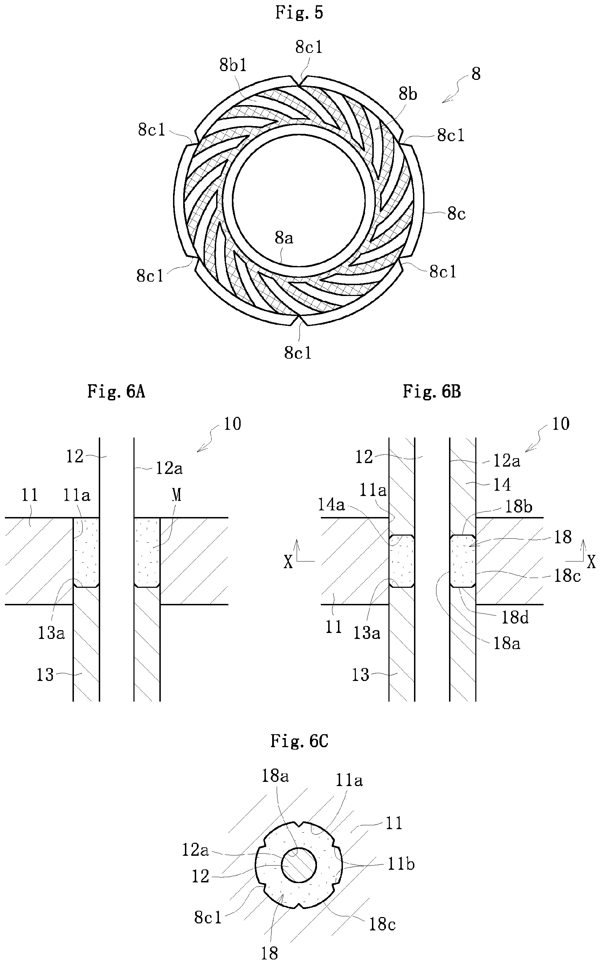

Dynamic pressure generating grooves 8b1 having a spiral pattern as illustrated in FIG. 5 are formed in a lower end surface 8b of the sinteredbearing 8. The dynamic pressure generating grooves 8b1 in the illustrated example are of a pump-in type of force-feeding a lubricating fluid to the radially inner side. As illustrated in FIG. 3, an annular groove 8d1 and a plurality of radial grooves 8d2 formed on the radially inner side with respect to the annular groove 8d1 are formed in an upper end surface 8d of the sintered bearing 8.

The housing 7 has a cylindrical side 7a and a disk-like bottom 7b closing a lower opening of the side 7a. In the illustrated example, the side 7a and the bottom 7b are integrally formed through injection molding with resin. Pump-in type dynamic pressure generating grooves having a spiral pattern are formed in an upper end surface 7b1 of the bottom 7b as thrust dynamic pressure generating portions (not shown). The dynamic pressure generating grooves may be formed simultaneously with, for example, injection molding for the housing 7.

The sealing member 9 is made of resin or metal, and is formed into an annular shape. The sealing member 9 is fixed on an upper end of an inner peripheral surface 7a1 of the side 7a of the housing 7 (see FIG. 2). A lower end surface 9b of the sealing member 9 is held in abutment against the upper end surface 8d of the sintered bearing 8. An inner peripheral surface 9a of the sealing member 9 is opposed to the tapered surface 2a2 formed on an outer peripheral surface of the shaft portion 2a in the radial direction, and a wedge-like seal space S having a radial dimension gradually reduced toward the lower side is formed between the inner peripheral surface 9a and the tapered surface 2a2. During the rotation of the shaft member 2, the seal space S serves as a capillary-force seal and a centrifugal-force seal, thereby preventing a lubricating oil filled in the housing 7 from leaking out.

The lubricating oil as a lubricating fluid is injected into the fluid dynamic bearing device 1 comprising the above-mentioned components. In this manner, an internal space of the fluid dynamic bearing device 1 including internal pores of the sintered bearing 8 is filled with the lubricating oil, and an oil surface is always maintained within the seal space S. Grease or a magnetic fluid may be used as the lubricating fluid besides the lubricating oil.

When the shaft member 2 is rotated, a radial bearing gap is formed between the inner peripheral surface 8a of the sintered bearing 8 and the outer peripheral surface 2a1 of the shaft portion 2a. Further, a pressure of an oil film in the radial bearing gap is increased by the dynamic pressure generating grooves 8a11 and the like formed in the inner peripheral surface 8a of the sintered bearing 8. Owing to this dynamic pressure generating action, there are formed a first radial bearing portion R1 and a second radial bearing portion R2 configured to rotatably support the shaft member 2 in a non-contact manner.

At the same time, a thrust bearing gap is formed between an upper end surface 2b1 of the flange portion 2b and the lower end surface 8b of the sintered bearing 8, and a thrust bearing gap is formed between a lower end surface 2b2 of the flange portion 2b and the upper end surface 7b1 of the bottom 7b of the housing 7. Further, the pressure of the oil film in each of the thrust bearing gaps is increased by the dynamic pressure generating grooves 8b1 formed in the lower end surface 8b of the sintered bearing 8 and the dynamic pressure generating grooves formed in the upper end surface 7b1 of the bottom 7b of the housing 7. Thus, there are formed a first thrust bearing portion T1 and a second thrust bearing portion T2 configured to rotatably support the shaft member 2 in both thrust directions in a non-contact manner.

At this time, the dynamic pressure generating grooves 8b1 formed in the lower end surface 8b of the sintered bearing 8 and the dynamic pressure generating grooves formed in the upper end surface 7b1 of the bottom 7b of the housing 7 are both of the pump-in type. Thus, the lubricating oil, which is filled in a space on the radially outer side with respect to the thrust bearing gaps at the first and second thrust bearing portions T1, T2 (space between the outer peripheral surface of the flange portion 2b and the inner peripheral surface 7a1 of the housing 7), is drawn to the radially inner side. In this embodiment, the space is communicated to the seal space S through the axial grooves 8c1 of the outer peripheral surface 8c of the sintered bearing 8 and the annular groove 8d1 and the radial grooves 8d2 of the upper end surface 8d. Thus, the above-mentioned space is always maintained in a state having a pressure close to an atmospheric pressure, thereby being capable of preventing generation of a negative pressure in the space. In particular, in this embodiment, the dynamic pressure generating grooves 8a11 and 8a12 formed in the upper region in the inner peripheral surface 8a of the sintered bearing 8 have an asymmetric shape in the axial direction. Thus, along with the rotation of the shaft member 2, a pumping force of force-feeding downward the lubricating oil in the radial bearing gap is generated. With this, the lubricating oil circulates through a path in the order of the radial bearing gap, the thrust bearing gap at the first thrust bearing portion T1, the axial grooves 8c1, the annular groove 8d1 and the radial grooves 8d2, and the radial bearing gap. Thus, local generation of a negative pressure in the lubricating oil filled in the housing 7 can be reliably prevented.

Now, a method of manufacturing the above-mentioned sintered bearing 8 is described. The sintered bearing 8 is manufactured through a forming step, a sintering step, and a sizing step.

In the forming step, material powder obtained by mixing various kinds of powder is subjected to compression molding so as to be formed into a cylindrical shape, thereby obtaining a compact. The material powder contains, for example, copper powder, iron powder, tin powder, and graphite powder. Specifically, in the forming step, first, as illustrated in FIG. 6(a), a material powder M is poured into a cavity defined by an inner peripheral surface 11a of a die 11 of a forming die 10, an outer peripheral surface 12a of a core rod 12, and an upper end surface 13a of a lower punch 13. Forming patterns 11b having a shape in conformity with the axial grooves 8c1 are formed on the inner peripheral surface 11a of the die 11 {see FIG. 6(c)}.

Further, as illustrated in FIG. 6(b), an upper punch 14 is moved downward to compress the material powder M from the upper side, thereby forming a cylindrical compact 18. At this time, the forming patterns 11b on the inner peripheral surface 11a of the die 11 cause the six axial grooves 8c1 arranged equiangularly to be formed in an outer peripheral surface 18c of the compact 18 {see FIG. 6(c)}. Further, forming patterns (not shown) having a shape in conformity with the annular groove 8d1 and the radial grooves 8d2 are formed on a lower end surface 14a of the upper punch 14. The forming patterns are pressed to form the annular groove 8d1 and the radial grooves 8d2 in one end surface 18b of the compact 18. An inner peripheral surface 18a of the compact 18 is formed into a smooth cylindrical surface. Another end surface 18d of the compact 18 is formed into a smooth flat surface. Tapered chamfered portions are formed on corners of the compact 18 (both upper and lower ends of each of the inner peripheral surface 18a and the outer peripheral surface 18c). After that, the compact 18 is pushed upward by the lower punch 13, and the compact 18 is taken out from an inner periphery of the die 11 (not shown).

In the sintering step, the compact 18 is sintered at a predetermined sintering temperature, thereby forming a sintered body 28. The sintering temperature is set to, for example, from 850°C to 900°C, and is set to 870°C in this embodiment.

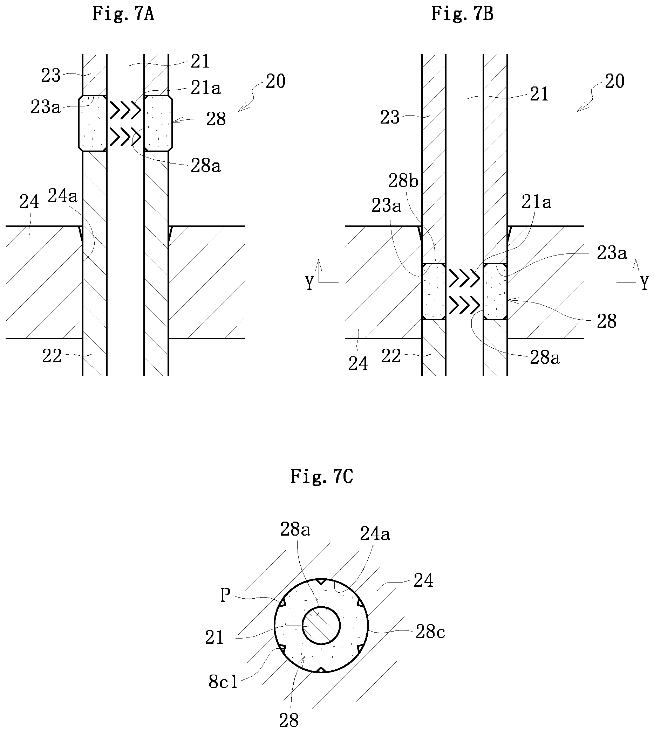

In the sizing step, the sintered body 28 is corrected to a predetermined dimension accuracy with a sizing die 20, and the dynamic pressure generating grooves are formed in an inner peripheral surface 28a of the sintered body 28 through die molding. Specifically, as illustrated in FIG. 7 (a), a core rod 21 is inserted along an inner periphery of the sintered body 28. Then, the sintered body 28 is supported from the lower side with a lower punch 22, and, while maintaining a relative position of the sintered body 28 and the core rod 21, as illustrated in FIG. 7(b), the sintered body 28 is pushed downward with the upper punch 23 to be press-fitted to an inner periphery of the die 24. With this, the sintered body 28 is compressed from an outer periphery thereof to press the inner peripheral surface 28a of the sintered body 28 onto the forming patterns 21a formed on the outer peripheral surface of the core rod 21. Thus, the shape of the forming patterns 21a is transferred to the inner peripheral surface 28a of the sintered body 28, thereby forming the dynamic pressure generating grooves 8a11 and the like in the inner peripheral surface 28a. At the same time, forming patterns (not shown) formed on a lower surface 23a of the upper punch 23 are pressed onto an end surface 28b of the sintered body 28, thereby forming the dynamic pressure generating grooves 8b1 in the end surface 28b. In the sizing step, the sintered body 28 is formed under a state of being vertically inverted from the sintered bearing 8 illustrated in FIG. 2 and FIG. 3, and the dynamic pressure generating grooves 8b1 are formed in the end surface 28b of the sintered body 28, which is located on the upper side in FIG. 7 (b) . After that, the sintered body 28 and the core rod 21 are taken out from the inner periphery of the die 24, and the inner peripheral surface 28a of the sintered body 28 is increased in diameter through spring back, thereby releasing the sintered body 28 from the outer peripheral surface of the core rod 21. Then, the core rod 21 is pulled out from the inner periphery of the sintered body 28.

In this manner, the sintered bearing 8 is completed. The inner peripheral surface of the sintered body before being subjected to the sizing step may be subjected to pore-sealing treatment such as rotation sizing or shot blasting, as needed.

According to the above-mentioned manufacturing method, the following effects can be obtained. That is, an outer peripheral surface 28c of the sintered body 28 carried into the sizing die 20 has the plurality of axial grooves 8c1 formed in the forming step. Therefore, when the sintered body 28 is press-fitted to the inner periphery of the die 24 in the sizing step, as illustrated in FIG. 7(c), spaces P are formed between the axial grooves 8c1 of the outer peripheral surface 28c of the sintered body 28 and a cylindrical inner peripheral surface 24a of the die 24. In this case, in the forming region for the axial grooves 8c1, the sintered body 28 is not compressed by the die 24, and hence a compression force applied to the sintered body 28 is nonuniform in the circumferential direction. Thus, a force of pressing the inner peripheral surface 28a of the sintered body 28 onto the outer peripheral surface of the core rod 21 is nonuniform in the circumferential direction. Therefore, waves in the circumferential direction as illustrated with exaggeration in FIG. 8 are formed on the inner peripheral surface 28a of the sintered body 28 taken out from the sizing die. There is a fear in that the variation in groove depth of the dynamic pressure generating grooves 8a11 and the like is increased due to the waves.

In this embodiment, as described above, the number of the axial grooves 8c1 to be formed in the compact 18 in the forming step is set equal to the number of the dynamic pressure generating grooves on the same circumference, which are to be formed in the sintered body 28 in the sizing step (the number of each of the dynamic pressure generating grooves 8a11, 8a12, 8a21, and 8a22 is six). With this, as illustrated in FIG. 9, a wavelength T of the waves formed on the inner peripheral surface 28a of the sintered body 28 and a pitch t of the dynamic pressure generating grooves 8a11 and the like are equal to each other. Thus, the dynamic pressure generating grooves 8a11 and the like are formed at the same portions of the waves. Therefore, influences on the dynamic pressure generating grooves 8a11 and the like by the waves are substantially equalized, thereby suppressing the variation in groove depth of the dynamic pressure generating grooves 8a11 and the like. As described above, the uniform groove depth of the dynamic pressure generating grooves 8a11 and the like is achieved, thereby enhancing an effect of increasing the pressure of the oil film in the radial bearing gap (dynamic pressure generating action), which may be attained by the dynamic pressure generating grooves 8a11 and the like. Thus, the bearing rigidity in the radial direction, and therefore, the rotation accuracy of the shaft member 2 are enhanced. In particular, in this embodiment, the groove depth D2 of each of the axial grooves 8c1 is equal to or smaller than 20% of a thickness W of the sintered bearing 8 as described above. Thus, the waves on the inner peripheral surface 28a of the sintered body 28 are originally suppressed, thereby being capable of further uniformizing the groove depths of the dynamic pressure generating grooves 8a11 and the like.

The present invention is not limited to the embodiment described above. Now, description is made of other embodiments of the present invention. Portions having the same functions as those in the embodiment described above are denoted by the same reference symbols, and redundant description thereof is omitted.

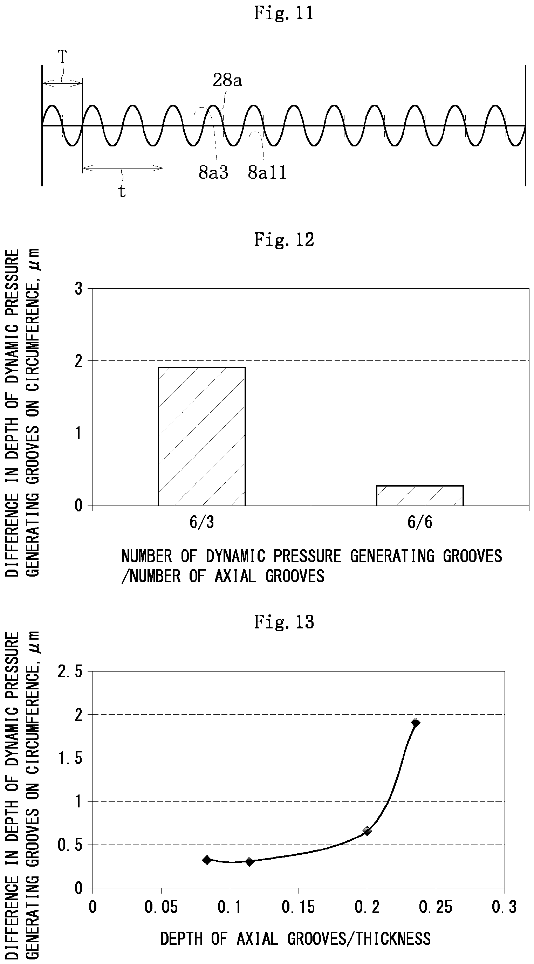

In the above-mentioned embodiment, description is given of the case where the number of the axial grooves 8c1 to be formed in the outer peripheral surface 8c of the sintered bearing 8 is equal to the number of the dynamic pressure generating grooves 8a11 and the like on the same circumference, which are to be formed in the inner peripheral surface 8a. However, the present invention is not limited thereto, and it is all necessary that the number of the axial grooves 8c1 be an integral multiple of the number of the dynamic pressure generating grooves 8a11 and the like on the same circumference. For example, in the sintered bearing 8 as illustrated in FIG. 10, the number of the axial grooves 8c1 is twice as large as the number of the dynamic pressure generating grooves 8a11 on the same circumference. Specifically, the number of the axial grooves 8c1 is twelve, and the number of the dynamic pressure generating grooves 8a11 is six. In this case, as illustrated in FIG. 11, the pitch t of the dynamic pressure generating grooves 8a11 and the like is twice as large as the wavelength T of the waves, and the dynamic pressure generating grooves 8a11 and the like are formed at the same positions of the waves. Therefore, similarly to the above-mentioned embodiment, the influences on the dynamic pressure generating grooves 8a11 and the like by the waves are substantially equalized, thereby suppressing the variation in groove depth of the dynamic pressure generating grooves 8a11 and the like. Also when the number of the axial grooves 8c1 is set to be three times, four times, and more times as large as the number of the dynamic pressure generating grooves 8a11 and the like on the same circumference, the same effects as those described above can be obtained. However, when the number of the axial grooves 8c1 is too large, the cylindrical surface region in the outer peripheral surface 8c of the sintered bearing 8 is reduced, thereby causing a fear in that a fixing force with respect to the housing 7 is insufficient. Therefore, it is preferred that the axial grooves 8c1 be formed to have an area that is equal to or smaller than 20% of the area of the outer peripheral surface 8c of the sintered bearing 8.

Further, in the above-mentioned embodiment, description is given of the case where the dynamic pressure generating grooves 8a11 and the like having a herringbone pattern are formed in the inner peripheral surface 8a of the sintered bearing 8. However, the present invention is not limited thereto, and there may be formed dynamic pressure generating grooves having a spiral pattern or dynamic pressure generating grooves having a stepped pattern extending along the axial direction. Any of the dynamic pressure generating grooves is formed by subjecting the cylindrical inner peripheral surface of the sintered body to sizing. Further, in the above-mentioned embodiment, the dynamic pressure generating grooves 8a11 and the like are formed at the two positions of the inner peripheral surface 8a of the sintered bearing 8, which are separated from each other in the axial direction. However, the dynamic pressure generating grooves 8a11 and the like may be formed continuously in the axial direction, or only one pair of dynamic pressure generating grooves having a herringbone pattern may be formed.

Further, in the above-mentioned embodiment, description is given of the case where the dynamic pressure generating grooves 8b1 having a spiral pattern are formed in the lower end surface 8b of the sintered bearing 8. However, the present invention is not limited thereto. Dynamic pressure generating grooves having another shape, such as a herringbone pattern or a stepped pattern, may be formed. Further, the lower end surface 8b of the sintered bearing 8 may be formed into a flat surface, and dynamic pressure generating grooves may be formed in the upper end surface 2b1 of the flange portion 2b of the shaft member 2, which is opposed to the lower end surface 8b of the sintered bearing 8.

Further, the above-mentioned sintered bearing 8 is applicable not only to the fluid dynamic bearing device of a shaft rotation type, which is configured to support rotation of the shaft member, but also to a fluid dynamic bearing device of a shaft fixing type, in which the shaft member is fixed and the sintered bearing is rotated, or a fluid dynamic bearing device in which both the shaft member and the sintered bearing are rotated.

Further, the above-mentioned fluid dynamic bearing device is applicable not only to a spindle motor for an HDD, but also to a spindle motor for other information equipment, a polygon scanner motor for a laser beam printer, a color wheel for a projector, or a fan motor for an electrical apparatus.

### Example 1

In order to verify effects of the present invention, regarding the sintered bearing having the dynamic pressure generating grooves 8a11 and the like as illustrated in FIG. 3 formed in the inner peripheral surface, an inventive product having six axial grooves equiangularly formed in an outer peripheral surface thereof and a comparative product having three axial grooves equiangularly formed in an outer peripheral surface thereof were manufactured. In each of the inventive product and the comparative product, the variation in groove depth of the dynamic pressure generating grooves on the same circumference was measured. Specifically, a circularity waveform of the inner peripheral surface at a predetermined axial position (for example, the line IV-IV of FIG. 3) of each of the inventive product and the comparative product was measured, and, based on the waveform, a difference in radial position of the groove bottoms of the dynamic pressure generating grooves with respect to the axial center of the sintered bearing was calculated. As a result, as shown in FIG. 12, the variation in groove depth of the dynamic pressure generating grooves on the same circumference was apparently smaller in the inventive product than in the comparative product (one-fourth or smaller). It was proved from this result that the variation in groove depth of the dynamic pressure generating grooves can be suppressed by setting the number of the axial grooves to be equal to the number of the dynamic pressure generating grooves on the same circumference.

### Example 2

Further, in the above-mentioned comparative product, the variation in groove depth of the dynamic pressure generating grooves when the groove depths of the axial grooves were set to be different from each other were measured. As a result, as shown in FIG. 13, as the groove depths of the axial grooves were increased, the variation in groove depth of the dynamic pressure generating grooves was increased. In particular, when the groove depth of each of the axial grooves exceeded 20% of the radial thickness of the sintered bearing, the variation in the depth of the dynamic pressure generating grooves was significantly increased. It was proved from this result that it was preferred that the groove depth of each of the axial grooves be set equal to or smaller than 20% of the radial thickness of the sintered bearing.

### Reference Signs List

- 1: fluid dynamic bearing device

- 2: shaft member
- 7: housing
- 8: sintered bearing
- 8a11, 8a12, 8a21, 8a22: dynamic pressure generating groove
- 8c1: axial groove
- 9: sealing member
- 10: forming die
- 11: die
- 12: core rod
- 13: lower punch
- 14: upper punch
- 18: compact
- 20: sizing die
- 21: core rod
- 22: lower punch
- 23: upper punch
- 24: die
- 28: sintered body
- R1, R2: radial bearing portion
- T1, T2: thrust bearing portion
- S: seal space

## Claims

1. A sintered bearing having a plurality of axial grooves equiangularly arranged in an outer peripheral surface thereof and a plurality of dynamic pressure generating grooves equiangularly arranged in an inner peripheral surface thereof,
wherein a number of the plurality of axial grooves is an integral multiple of a number of the plurality of dynamic pressure generating grooves on the same circumference.

2. The sintered bearing according to claim 1, wherein a radial depth of each of the plurality of axial grooves is equal to or smaller than 20% of a radial thickness of the sintered bearing.

3. A fluid dynamic bearing device, comprising:
the sintered bearing of claim 1 or 2;
a shaft member inserted along an inner periphery of the sintered bearing; and
a radial bearing portion configured to support the shaft member in a radial direction with a pressure of a fluid film generated in a radial bearing gap between an inner peripheral surface of the sintered bearing and an outer peripheral surface of the shaft member.

4. A motor, comprising:
the fluid dynamic bearing device of claim 3;
a stator coil; and
a rotor magnet.

5. A method of manufacturing a sintered bearing, comprising the steps of:
subjecting material powder to compression molding to form a compact having a plurality of axial grooves equiangularly arranged in an outer peripheral surface thereof;
sintering the compact to form a sintered body; and
sizing by inserting a core rod having forming patterns on an outer peripheral surface thereof along an inner periphery of the sintered body, compressing the sintered body from an outer periphery thereof under a state in which the core rod is inserted along the inner periphery of the sintered body, and by pressing an inner peripheral surface of the sintered body onto the forming patterns on the outer peripheral surface of the core rod, thereby forming a plurality of dynamic pressure generating grooves equiangularly arranged in the inner peripheral surface of the sintered body,
wherein a number of the plurality of axial grooves is an integral multiple of a number of the plurality of dynamic pressure generating grooves on the same circumference.

6. The method of manufacturing a sintered bearing according to claim 5, wherein a radial depth of each of the plurality of axial grooves is equal to or smaller than 20% of a radial thickness of the sintered bearing.
